# FASCICULE DE BREVET EUROPEEN

(11) **EP 2 064 431 B1**
(45) Date de publication et mention de la délivrance du brevet: **02.11.2016**
(21) Numéro de dépôt: 07848218.9
(22) Date de dépôt: 11.09.2007
(51) Int. Cl.: F02G 1/00

(54) **MOTEUR THERMIQUE À SOURCE CHAUDE EXTERNE**
WÄRMEKRAFTMASCHINE MIT EXTERNER WÄRMEQUELLE
HEAT ENGINE WITH EXTERNAL HOT SOURCE

(30) Priorité: 11.09.2006 FR 0607933
(43) Date de publication de la demande: 03.06.2009
(73) Titulaire: Thevenod, Frédéric, 75002 Paris (FR)
(72) Inventeur: Thevenod, Frédéric, 75002 Paris (FR)
(74) Mandataire: Pontet Allano & Associes
(86) Numéro de dépôt international: PCT/FR2007/001466
(87) Numéro de publication internationale: WO 2008/031939

(56) Documents cités:
- DE-A1- 4 042 305
- FR-A- 2 673 979
- FR-A- 2 738 596
- GB-A- 1 081 499
- US-A- 4 962 645

## Description

La présente invention concerne un moteur thermique à source chaude externe notamment à récupération de la chaleur d'échappement pour les applications sur véhicules de toute nature, qu'ils soient terrestres, maritimes ou aériens.

Le fonctionnement des moteurs thermiques à source chaude classiques est efficace surtout pour des températures élevées de la source chaude. Leurs performances se dégradent cependant lorsque la température de ladite source chaude reste modérée, comme c'est le cas pour les gaz d'échappement des moteurs à combustion interne.

FR2673979A1 décrit un moteur thermique à source chaude externe, conforme au préambule de la revendication indépendant 1.

Les moteurs à combustion interne ont un rendement énergétique relativement modeste. Ceci est dû en grande partie à l'énergie thermique que ces moteurs rejettent à l'environnement par leur système de refroidissement et surtout par leur échappement.

En particulier pour les applications sur véhicule, dans lesquels le poids, l'encombrement et le coût du moteur jouent un rôle important, l'énergie rejetée a été peu exploitée jusqu'à présent. Par exemple, l'énergie rejetée à l'échappement se présente sous forme d'un gaz à faible pression et température relativement modérée. La transformation de cette énergie rejetée en énergie mécanique par des moyens usuels se traduit par une machinerie lourde, encombrante et coûteuse ayant une efficacité discutable.

Des solutions telles que décrites par les brevets US 3 180 078 A, US 4 121 423 A, DE 101 43 342 A1, JP 2004 270625 A, et US 4 754 606 A proposent toutefois des solutions de moteur hybride thermique-combustion interne. Mais aucune de ces solutions n'est capable de s'affranchir conjointement de ces contraintes de poids, d'encombrement, de coût, et surtout d'efficacité. La plupart de ces arts antérieurs prévoient de comprimer un gaz de travail puis le réchauffer avec la chaleur de récupération avant de la détendre. Mais comme la chaleur de récupération est disponible à une température qui n'est que faiblement supérieure à la température du gaz de travail en fin de compression, le rendement du processus est bas.

Le but de la présente invention est ainsi de proposer un moteur thermique, capable de transformer efficacement en énergie mécanique une énergie thermique issue d'une source tiède, typiquement l'énergie résiduelle rejetée à l'issue d'un processus de combustion interne, en particulier d'une manière compatible avec les impératifs usuels des applications aux véhicules.

Suivant l'invention, le moteur thermique à source chaude externe dans lequel le moteur possède au moins une chambre de travail à volume variable pour un gaz de travail, et une distribution faisant communiquer cette chambre avec une entrée froide d'un trajet récepteur de calories pendant une phase de transfert sortant et avec une sortie chaude du trajet récepteur de calories pendant une phase de transfert entrant, le trajet récepteur de calories étant destiné réchauffer le gaz de travail à l'extérieur de la chambre au contact de la source chaude externe, est caractérisé en ce que la distribution est calée de façon à :
- entretenir une pression dans le trajet récepteur de calories;
- mettre en communication lors du fonctionnement établi la chambre de travail avec l'entrée froide du trajet récepteur de calories alors que la pression dans la chambre est inférieure à la pression dans le trajet récepteur de calories.

Le calage de distribution selon l'invention est surprenant car il permet à du gaz de travail se trouvant déjà dans le trajet d'échange de refluer dans la chambre de travail, à la suite de quoi ce gaz de travail ayant reflué et celui venant d'être comprimé devront tous deux être expulsés dans le trajet d'échange. Par conséquent, on aboutit à première vue à une augmentation du travail négatif du cycle. Cependant, le gaz de travail qui était faiblement comprimé avant la mise en communication de la chambre avec l'entrée froide du trajet d'échange se trouve donc à une température relativement basse. Grâce à sa faible température, le gaz de travail venant d'être (relativement faiblement) comprimé est apte à recueillir une relativement grande quantité d'énergie thermique de la part des gaz d'échappement du moteur à combustion interne, malgré la température relativement faible de ces derniers. On peut ainsi quasiment multiplier par deux la température absolue du gaz de travail dans le trajet d'échange, donc multiplier par deux le volume de gaz en début de détente par rapport au volume de gaz en fin de compression, pour une même masse de gaz de travail. L'invention permet ainsi de réaliser dans le moteur thermique un cycle thermodynamique ayant une aire relativement grande, produisant donc une puissance mécanique substantielle.

En outre, le gaz de travail en fin de détente peut présenter une température supérieure au gaz de travail en fin de compression et au début du trajet d'échange. Ce phénomène permet d'utiliser le gaz de travail refoulé par le piston du moteur thermique comme source de chaleur pour un premier étage de la source de chaleur externe, en parallèle ou en mélange avec les gaz d'échappement du moteur thermique.

Grâce à cette solution simple et peu coûteuse, le moteur thermique est capable de performances nominales améliorées tout en permettant un poids et un encombrement réduit. Il est donc tout à fait compatible avec les impératifs usuels des applications aux véhicules, et peut être associé avec le moteur à combustion interne du véhicule pour former un moteur hybride.

Cette association est réalisable suivant une architecture privilégiée du moteur hybride dans laquelle le moteur à combustion interne comporte des pistons accouplés à un arbre du moteur hybride, et le moteur thermique possède au moins un piston accouplé à l'arbre du moteur hybride. La source chaude du moteur thermique est alors alimentée en énergie calorifique par l'échappement du moteur à combustion interne.

Grâce à cette architecture, la structure générale d'un moteur hybride est peu différente de celle d'un moteur à combustion interne classique, par exemple du type à bielles et manivelles.

L'encombrement, le poids et le coût de l'ensemble sont compatibles avec les exigences actuelles, alors que la consommation spécifique du moteur hybride (quantité de carburant consommée par unité de puissance et unité de temps) se trouve particulièrement abaissée.

En particulier, le moteur à combustion interne et le moteur thermique peuvent posséder un bloc-moteur commun dans lequel sont formés des cylindres de dimensions identiques, dans lesquels les pistons effectuent des courses de longueur identique. On peut également envisager que le diamètre des cylindres du moteur thermique, et/ou la course de ses pistons, diffèrent légèrement de ceux du moteur à combustion interne, même si le moteur thermique et le moteur à combustion interne possèdent un bloc-moteur commun.

On peut par exemple envisager un moteur à trois cylindres dans lequel deux cylindres appartiennent au moteur à combustion interne et un cylindre appartient au moteur thermique récupérant et exploitant l'énergie d'échappement des deux cylindres du moteur à combustion interne.

D'une manière générale, le moteur thermique peut fonctionner avec une masse de gaz de travail appropriée pour absorber l'énergie thermique récupérable dans l'échappement du moteur à combustion interne. Cette masse de gaz de travail est réglable par une suralimentation appropriée et/ou par le choix d'un cycle à deux temps, même si le moteur à combustion interne fonctionne selon un cycle à quatre temps, et/ou par une cylindrée spécifique pour le moteur thermique.

Dans une version préférée, le moteur thermique comprend :
- une chambre de travail délimitée par le piston du moteur thermique, lequel provoque alternativement des temps de croissance et de décroissance du volume de la chambre ;
- un trajet d'échange thermique pour réchauffer un gaz de travail à l'extérieur de la chambre, au contact de la source chaude externe ;
- une distribution pour sélectivement fermer la chambre de travail et respectivement faire sélectivement communiquer la chambre de travail avec une admission de gaz de travail, un refoulement de gaz de travail, une entrée froide du trajet d'échange et une sortie chaude du trajet d'échange.

Les gaz d'échappement du moteur à combustion interne et/ou le gaz de travail refoulé par le moteur thermique passent ensuite, de préférence, dans la turbine d'un turbocompresseur. Le compresseur de ce turbocompresseur alimente l'admission du moteur thermique et/ou l'admission du moteur à combustion interne.

Le moteur à combustion interne fonctionne typiquement selon le cycle Otto ou selon le cycle Diesel.

Il est avantageux que le calage de la distribution soit réglable en particulier pour permettre un gonflage initial du trajet d'échange. Pour cela il faut que la masse de gaz envoyée au trajet d'échange lors du transfert sortant soit supérieure à la masse de gaz prélevée dans le trajet d'échange lors du transfert entrant jusqu'à ce que le trajet d'échange atteigne la pression souhaitée. Le calage de la distribution peut également faire partie d'un système de réglage, par exemple d'une régulation de la pression dans le trajet d'échange.

Le moteur thermique peut fonctionner suivant un cycle à deux temps dans lequel la phase de refoulement, la phase de compression et la phase de transfert sortant se succèdent le long d'une même course de décroissance du volume de la chambre. L'admission dans la chambre de travail peut alors être réalisée sous pression relativement élevée entre la phase de refoulement et la phase de compression, grâce à une suralimentation produisant une pression relativement élevée.

Le moteur thermique peut également fonctionner selon un cycle à quatre temps. Dans ce cas, au lieu de correspondre à une brève phase entre le refoulement et la compression, l'admission de gaz de travail peut occuper un temps complet de croissance du volume de la chambre. Pendant le temps suivant, de décroissance du volume de la chambre, la phase de compression est suivie de la phase de transfert sortant.

Au cours du temps suivant, la phase de transfert entrant est suivie par la phase de détente, tandis que le quatrième temps correspond au refoulement du gaz de travail hors de la chambre.

D'autres particularités et avantages de l'invention ressortiront encore de la description ci-après, relative à des exemples non limitatifs.

Aux dessins annexés :
- la figure 1 est un schéma de principe d'un moteur hybride selon l'invention, avec moteur thermique à 1 cylindre, deux temps ;
- la figure 2 est une vue schématique en coupe longitudinale du moteur de la figure 1 ;
- la figure 3 est une vue en bout du vilebrequin du moteur des figures 1 et 2 ;
- la figure 4 est un diagramme illustrant un cycle à deux temps du moteur thermique d'un moteur hybride selon l'invention ;
- la figure 5 est une vue axiale, schématique, du cylindre du moteur thermique ;
- la figure 5A est une vue en coupe verticale du moteur thermique d'un moteur hybride selon l'invention, dans le plan A-A de la figure 5, passant par les orifices d'admission et de refoulement, pendant une phase de refoulement ;
- la figure 5B est une vue analogue à la figure 5A mais la coupe verticale étant fait dans le plan B-B de la figure 5, passant par les orifices de transfert sortant et de transfert entrant du moteur thermique, toujours pendant la phase de refoulement du cycle ;
- les figures 6A à 10D sont toutes des coupes longitudinales du moteur thermique, dans le plan A-A de la figure 5 lorsque la figure porte un numéro suivi de la lettre A, et respectivement à travers le plan B-B de la figure 5 lorsque la figure porte un numéro suivi de la lettre B, et ceci lors des phases de cycle suivantes :

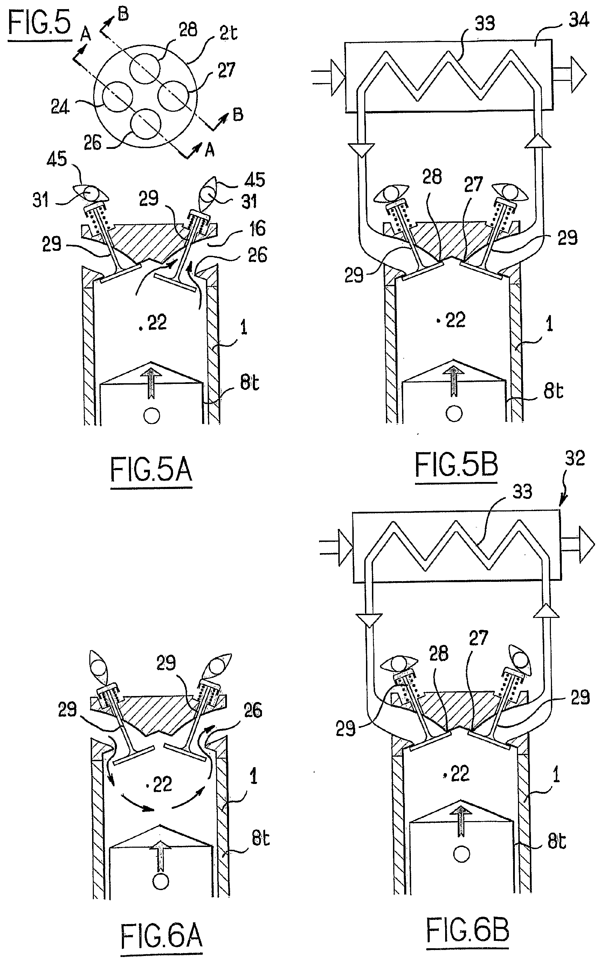

   - - figures 6A et 6B : phase d'admission et balayage ;

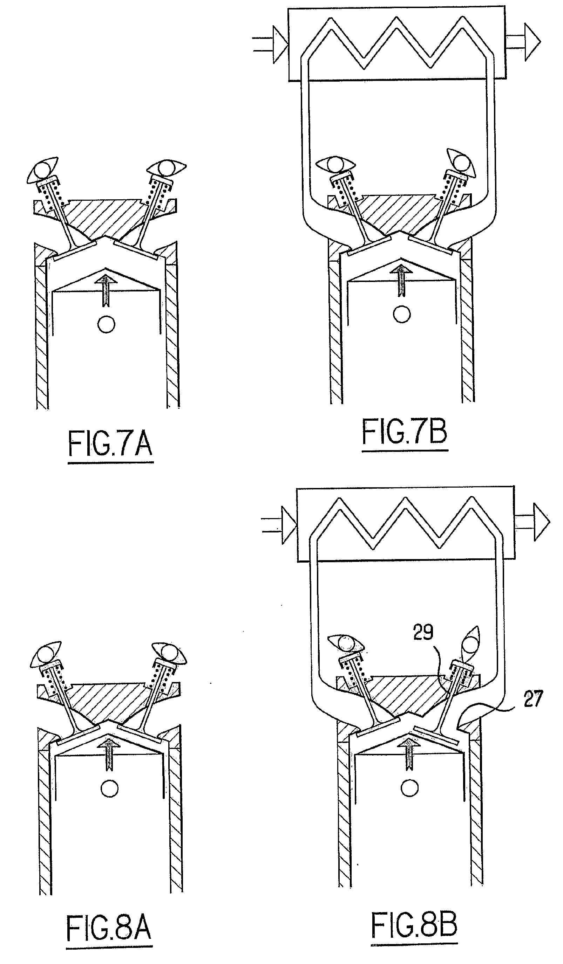

   - - figures 7A et 7B : phase de compression ;
   - - figures 8A et 8B : phase de transfert sortant ;

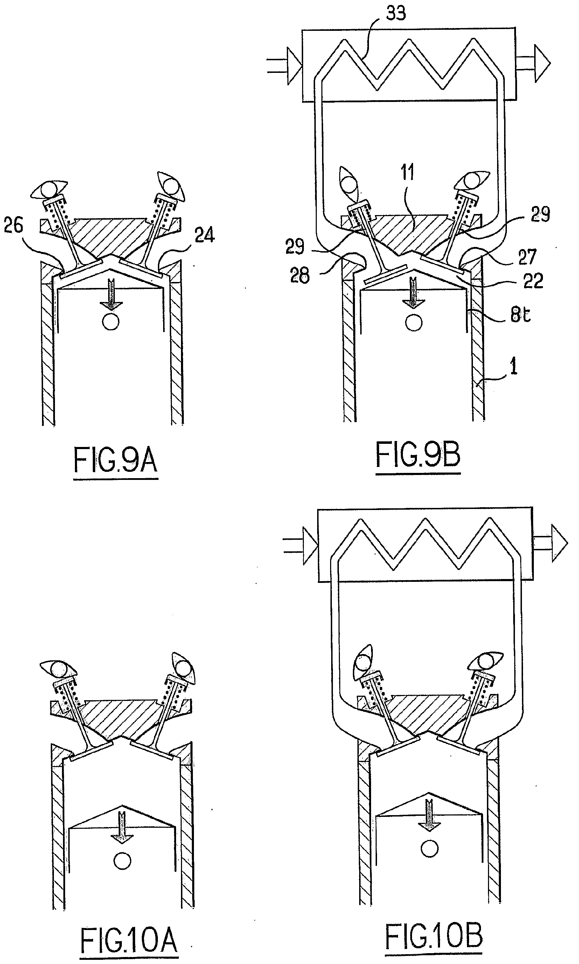

   - - figures 9A et 9b : phase de transfert entrant ;
   - - figures 10A et 10B : phase de détente.

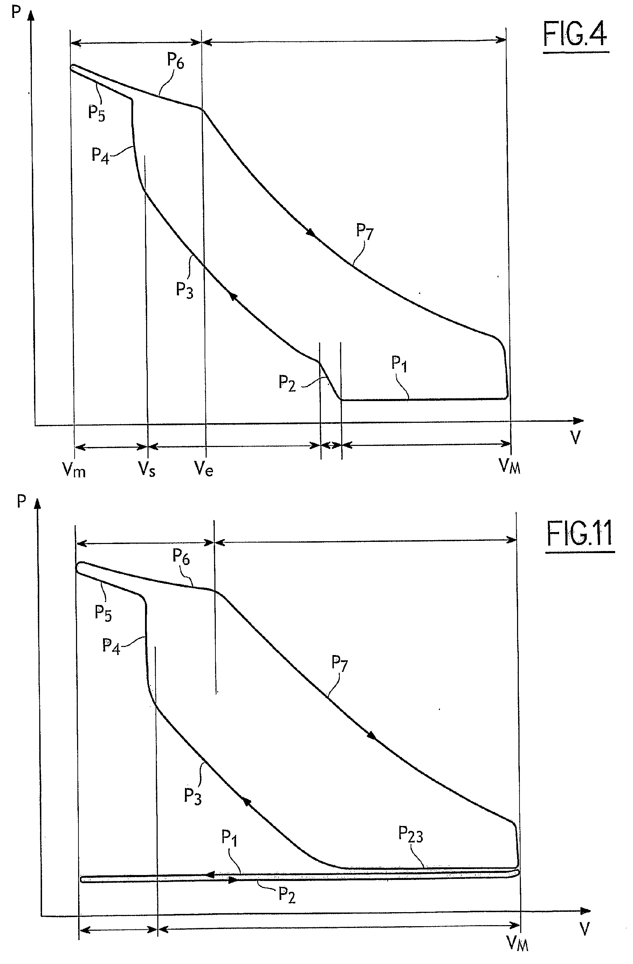

- la figure 11 est un diagramme analogue à la figure 4 mais visualisant un cycle à quatre temps du moteur thermique de l'invention ;

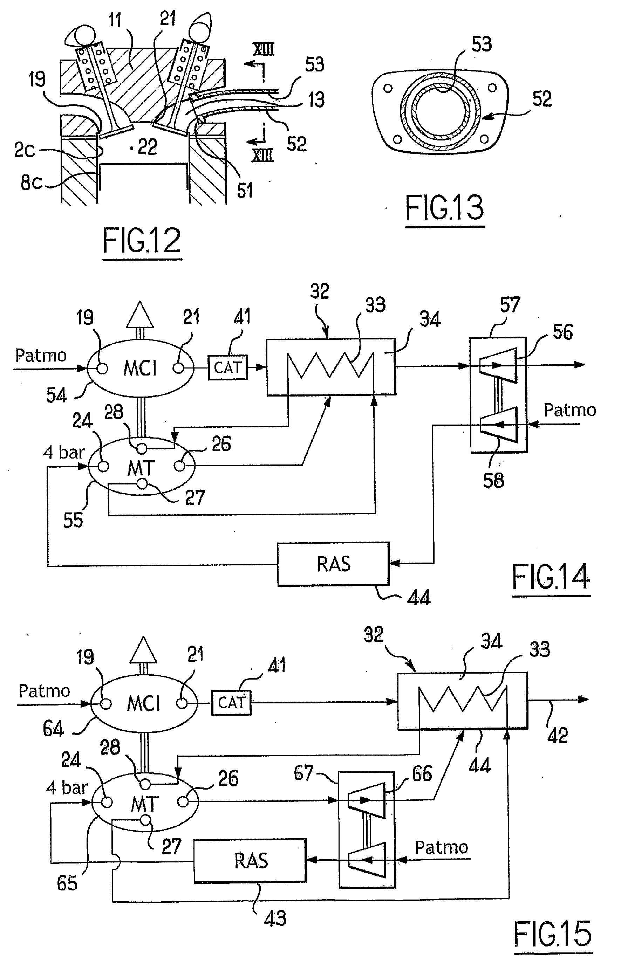

- la figure 12 est une vue partielle en coupe verticale du haut du moteur à combustion interne de l'invention ;
- la figure 13 est une vue en coupe suivant XIII-XIII de la figure 12 ; et
- les figures 14 à 17 sont des schémas de quatre configurations possibles de moteurs hybrides selon l'invention.

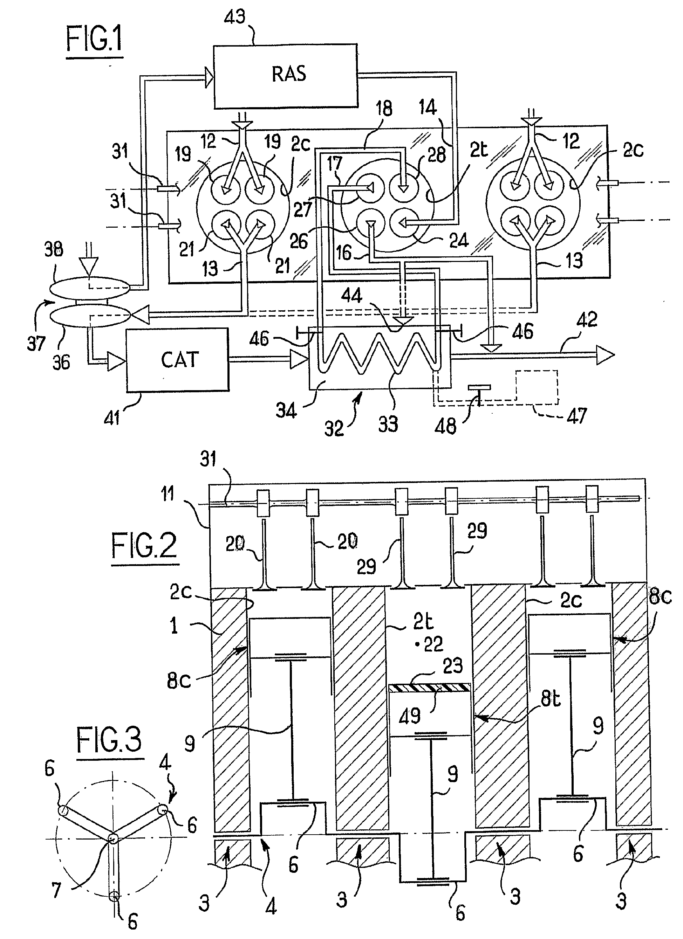

L'exemple de moteur hybride selon l'invention représenté aux figures 1 à 3 de manière extrêmement schématique comprend un bloc-moteur commun 1 dans lequel sont formés trois alésages cylindriques parallèles 2c, 2t selon la disposition dite « en ligne », c'est-à-dire que les axes de ces alésages sont coplanaires. Selon la terminologie usuelle, les alésages cylindriques 2c, 2t sont appelés « cylindres ». Dans sa région inférieure, le bloc-moteur porte des paliers 3 alignés suivant un axe 7, qui supportent un vilebrequin 4 qui est commun pour l'ensemble des cylindres 2c, 2t. Le vilebrequin 4 comporte un maneton 6 en regard de chacun des cylindres 2c, 2t. Comme le montre la figure 3, dans cet exemple à trois cylindres, les manetons 6 sont répartis angulairement à 120° les uns des autres, c'est-à-dire régulièrement, autour de l'axe de rotation 7 du vilebrequin.

Suivant l'invention, le moteur hybride regroupe un moteur à combustion interne auquel, dans cet exemple, sont affectés les deux cylindres 2c situés aux extrémités, et un moteur dit « thermique » selon l'invention auquel est affecté le cylindre central 2t.

Dans chacun des cylindres 2c du moteur à combustion interne est monté un piston coulissant 8c. Dans le cylindre 2t du moteur thermique, est monté un piston coulissant 8t. Chaque piston 8c, 8t est relié au maneton 6 correspondant par un bielle 9 articulée d'une part au piston et d'autre part au maneton.

Dans l'exemple particulier qui est décrit, les cylindres 2c et 2t ont des diamètres d'alésage identiques et leurs courses de travail ont des longueurs (égales à deux fois le rayon d'excentration des manetons 6) identiques. Les cylindrées unitaires (volume balayé par chaque piston dans son cylindre) sont donc égales entre elles. De préférence, on fait en sorte que les bielles 9 soient identiques et les pistons 8c et 8t aient une masse égale de sorte que le moteur hybride ne pose aucun problème particulier d'équilibrage dynamique.

Le bloc-moteur 1 est surmonté d'une culasse 11 qui n'est que très schématiquement représentée à la figure 2. La culasse 11 comporte des conduits d'admission 12 et d'échappement 13 pour chacun des cylindres 2c du moteur à combustion interne, ainsi qu'un conduit d'admission 14, un conduit de refoulement 16, un conduit de transfert sortant 17 et un conduit de transfert entrant 18 pour le cylindre 2t du moteur thermique.

Le moteur à combustion interne fonctionne typiquement selon un cycle classique Otto ou Diesel et, dans l'exemple représenté, chaque cylindre du moteur à combustion interne est associé à deux orifices d'admission 19 et deux orifices d'échappement 21, chacun équipé d'une soupape 20, d'admission ou d'échappement respectivement.

Chacun des conduits 14, 16, 17, 18 du moteur thermique est associé à un orifice 24, 26, 27, 28 faisant déboucher le conduit correspondant dans la chambre de travail 22 du moteur thermique, définie entre la face de pression 23 du piston 8t, la paroi de l'alésage 2t et la face inférieure de la culasse 11. Chaque orifice 24, 26, 27, 28 est équipé d'une soupape 29. Lorsque les quatre soupapes 29 (deux seulement sont représentées à la figure 2) sont fermées, c'est-à-dire ferment l'orifice qui leur est respectivement associé, la chambre de travail 22 est hermétiquement close.

Dans l'exemple représenté, les soupapes 20 et 29 sont globalement alignées en deux rangées de façon à être commandées par deux arbres à cames 31, dont un est représenté à la figure 2, et dont la position est simplement symbolisée à la figure 1. Par des moyens classiques, les arbres à cames 31 sont accouplés au vilebrequin 4 de façon à tourner deux fois moins vite que le vilebrequin 4 dans cet exemple où le moteur à combustion interne fonctionne suivant un cycle à quatre temps.

Le moteur thermique, correspondant au cylindre central 2t, est associé à une source chaude externe 32 (figure 1) constituée par un échangeur de chaleur gaz-gaz comprenant un trajet récepteur de calories 33 parcouru par du gaz, en général de l'air, préalablement comprimé dans la chambre de travail 22 du moteur thermique, et un trajet apporteur de calories 34 principalement parcouru par les gaz d'échappement du moteur à combustion interne, provenant donc directement ou indirectement des conduits d'échappement 13 et des orifices d'échappement 21 associés aux alésages 2c du moteur à combustion interne. L'échangeur constituant la source chaude 32 est du type à contre-courant, c'est-à-dire que le gaz en provenance de l'alésage 2t du moteur thermique traverse l'échangeur en sens inverse du gaz d'échappement du moteur à combustion interne, comme illustré par les flèches à la figure 1. L'entrée du trajet 33 récepteur de calories, raccordée à l'orifice de transfert sortant 27, est en contact thermique avec la sortie froide du trajet 34. La sortie du trajet 33 récepteur de calories, raccordée à l'orifice de transfert entrant 28, est en contact thermique avec l'entrée chaude du trajet apporteur de calories 34.

Dans l'exemple illustré plus particulièrement à la figure 1, le moteur à combustion interne aspire de l'air atmosphérique et son échappement est raccordé à la partie turbine 36 d'un turbocompresseur 37. A la sortie de la turbine 36 les gaz d'échappement du moteur à combustion interne passent dans un catalyseur 41 avant d'atteindre ensuite le trajet apporteur de calories 34 de la source chaude 32. A la sortie de la source chaude 32, les gaz d'échappement du moteur à combustion interne s'échappent à l'atmosphère comme illustré par la flèche 42, en général par un système de silencieux non représenté.

La partie compresseur 38 du turbocompresseur 37 aspire de l'air à l'atmosphère et envoie l'air comprimé à l'orifice d'admission 24 du moteur thermique, par l'intermédiaire d'un refroidisseur d'air de suralimentation 43.

On va maintenant décrire en référence à la figure 4 le cycle thermodynamique du moteur thermique dans l'exemple d'un cycle à deux temps.

La figure 4 représente, en ordonnées la pression P dans la chambre de travail 22 et en abscisses le volume V de la chambre de travail tel que défini de manière variable par le piston 8t.

Le cycle est à deux temps car l'ensemble des phases du cycle sont effectuées par un seul tour de vilebrequin 4 et par conséquent par un seul aller et retour du piston 8t. Le sens de parcours du cycle est indiqué par des flèches sur la courbe fermée illustrant ce cycle à la figure 4. En partant de la situation où la chambre de travail 22 a son volume maximal VM (position représentée à la figure 2 avec piston 8t éloigné au maximum de la culasse 11), la première phase P1 du cycle est une phase de refoulement, illustrée aux figures 5A et 5B, dans laquelle l'orifice de refoulement 26 est ouvert par la soupape 29 correspondante, tandis que les autres orifices 24, 27, 28 sont fermés par leur soupape 29 respective. Le gaz (air) contenu dans la chambre de travail 22 est refoulé dans le conduit de refoulement 16 par la remontée du piston 8t. Comme le montre la figure 1, le conduit 16 peut aller se raccorder à la sortie d'échappement 42 du moteur à combustion interne. En variante préférée, le conduit 16 est raccordé à un branchement 44 débouchant dans le trajet apporteur de calories 34 de la source chaude 32. La température des gaz d'échappement décroît progressivement le long du trajet 34, de son entrée vers sa sortie. Le branchement 44 est une entrée « tiède » positionnée dans une zone où la température des gaz d'échappement est intermédiaire entre celle de l'entrée et de la sortie du trajet 34, et sensiblement égale à celle à laquelle le gaz est refoulé du moteur thermique.

Plus particulièrement, la température à l'entrée du trajet apporteur de calories 34 peut être de 800°C, et elle peut être de l'ordre de 200°C à la sortie de ce trajet. Le long du trajet 34, la température des gaz d'échappement est donc progressivement décroissante de 800°C à 200°C. Si les gaz refoulés par le moteur thermique ont une température de l'ordre de 300°C, on fait déboucher le branchement 44 dans la zone du trajet 34 où les gaz d'échappement ont une température de 300°C.

Etant donné que les arbres à cames 31 tournent deux fois moins vite que le vilebrequin 4 du moteur alors que le moteur thermique fonctionne dans cet exemple selon un cycle à deux temps correspondant à un seul tour du vilebrequin, un cycle complet du moteur thermique correspond à un demi-tour des arbres à cames. C'est pourquoi, comme le montrent les figures 5A et 5B, les cames 44 portées par les arbres à cames 31 et associées au moteur thermique sont d'un type à deux profils diamétralement opposés pour réaliser deux cycles de fonctionnement par tour.

La phase de refoulement P1 est suivie par une phase d'admission et balayage P2 dans laquelle, comme représenté aux figures 6A et 6B, les orifices d'admission 24 et de refoulement 26 sont simultanément ouverts par leur soupape 29 respective de façon que l'air produit par la partie compresseur 38 du turbocompresseur 37 pénètre dans la chambre de travail 32 et chasse de celle-ci les gaz de refoulement qui s'y trouvent encore. Pendant ce temps, les deux orifices de transfert 27 et 28 sont toujours fermés par leurs soupapes 29 correspondantes.

La phase P2 est suivie par une phase de compression adiabatique P3 (figures 7A et 7B) dans laquelle le piston 8t continue sa course en direction de la culasse 11, réduisant le volume de la chambre de travail 22. Pendant cette phase de compression, les quatre orifices 24, 26, 27 et 28 sont fermés par leurs soupapes 29 respectives et la chambre de travail 22 est hermétiquement close.

Lorsque la chambre de travail 22 atteint un volume Vs plus grand que son volume minimum Vm, l'orifice de transfert sortant 27 (figure 8B) est ouvert par la soupape 29 correspondante, tandis que les autres orifices demeurent fermés. Il en résulte une phase de reflux P4 au cours de laquelle du gaz sous pression contenu dans le trajet récepteur de calories 33 de la source chaude 32 reflue dans la chambre de travail 22 en faisant augmenter la pression dans la chambre de travail 22. Le volume du trajet récepteur de calories 33 est bien plus grand que celui de la chambre de travail 22 au moment de la phase de reflux. Par conséquent le reflux s'effectue sans baisse de pression sensible dans le trajet récepteur de calories 33. La température du gaz se trouvant dans le trajet 33 au voisinage de l'orifice de transfert sortant 27 est à une température voisine de celle où se trouve le gaz remplissant la chambre de travail 22 à la fin de la compression P3. Par conséquent la montée en pression au cours de la phase de reflux P4 correspond essentiellement à un transfert de masse sans grande incidence thermique pour le gaz.

La phase de reflux P4 est suivie par une phase de transfert sortant P5 au cours de laquelle le piston 8t poursuit sa course jusqu'à ce que la chambre de travail 22 ait son volume minimal Vm, tandis que le gaz présent dans la chambre 22 est expulsé dans l'extrémité froide du trajet récepteur de calories 33. A cette occasion, la pression dans la chambre de travail 22 augmente légèrement, d'une part pour propulser le gaz, d'autre part pour assurer la légère compression volumétrique subie par le gaz dans le volume total de la chambre de travail 22 et du trajet récepteur de calories 33 puisque ce volume total est globalement comprimé par le mouvement du piston 8t.

Lorsque le piston 8t atteint son point mort haut (position la plus proche de la culasse 11), l'orifice de transfert sortant 27 se ferme et l'orifice de transfert entrant 28 s'ouvre, par un mouvement correspondant de leurs soupapes respectives 29 (Figure 9B). Pendant ce temps les orifices d'admission 26 et de refoulement 24 restent fermés. Le gaz sous pression provenant de l'extrémité chaude du trajet récepteur de calories 33 pénètre dans la chambre de travail 22 à travers l'orifice 28 au cours d'une phase de transfert entrant P6 jusqu'à ce que le piston 8t atteigne une position correspondant pour la chambre de travail 22 à un volume Ve plus grand que le volume Vs pour lequel avaient commencé la phase de reflux et de transfert sortant P4, P5.

Le volume Ve est choisi de façon que la masse de gaz pénétrant dans la chambre de travail 22 au cours de la phase P6 soit égale à celle expulsée au cours de la phase de transfert sortant P5. Comme le gaz entrant est beaucoup plus chaud que le gaz sortant, cette masse égale correspond à un volume Ve plus grand que le volume Vs.

Il importe de noter que le cycle décrit et représenté à la figure 4 est théorique. En pratique, les commandes des soupapes peuvent être décalées pour optimiser le cycle réel en fonction des délais de mise en mouvement des gaz et de l'inévitable progressivité des ouvertures et fermetures de soupapes. Par exemple, dans la réalité, il peut être nécessaire de démarrer la phase de reflux P₄ et de transfert sortant P₅ de façon plus précoce dans le cycle pour tenir compte de l'inertie des gaz au cours de ces mouvements dans un sens puis dans l'autre. Il est ainsi possible qu'en pratique le point d'ouverture de l'orifice de transfert sortant, identifié par Vs à la figure 4 se rapproche du point de fermeture de l'orifice de transfert entrant, identifié par Ve à la figure 4, ou vienne même coïncider avec Ve, ou même le précéder. En effet, l'une des originalités de l'invention consiste surtout à ouvrir l'orifice de transfert sortant alors que le gaz contenu dans la chambre de travail 22 n'est pas encore comprimé à une valeur correspondant à celle du trajet récepteur de calories 33. Ainsi, le gaz injecté dans l'extrémité froide de ce trajet est à une température remarquablement basse. Ceci permet de récupérer davantage de calories provenant de l'échappement du moteur à combustion interne, et permet même, comme on l'a vu précédemment grâce au branchement 44 (figure 1), de récupérer des calories provenant du refoulement du moteur thermique.

Il est également possible que pendant un bref instant, les orifices de transfert sortant 27 et de transfert entrant 28 soient ouverts simultanément pour réaliser ce que l'on appelle un « croisement des soupapes » (bien connu dans les moteurs à combustion interne à quatre temps à la fin du temps d'échappement et au début du temps d'admission).

La phase de transfert entrant P6 est suivie par une phase de détente adiabatique P7, au cours de laquelle le piston 8t s'éloigne de la culasse 11 jusqu'à atteindre sa position correspondant au volume maximum VM de la chambre de travail 22. Comme représenté aux figures 10A et 10B les quatre orifices sont alors fermés et le gaz subit une détente adiabatique. Le diagramme de la figure 4 montre clairement que la phase de transfert entrant P6 et la phase de détente P7 fournissent ensemble plus d'énergie mécanique au piston 8t que celui-ci n'en consomme pour effectuer les phases P1, P2, P3, P4 et P5 au cours desquelles il réduit le volume de la chambre 22 malgré la pression contraire régnant dans la chambre 22 pendant chacune de ces phases. Comme le sait l'homme de métier, ce surcroît de l'énergie mécanique produite par rapport à l'énergie mécanique consommée est visible par le fait que le diagramme pression volume de la figure 4 est parcouru dans le sens des aiguilles d'une montre.

Dans le diagramme théorique de la figure 4, on suppose que l'orifice de refoulement 26 s'ouvre lorsque le volume de la chambre de travail 22 atteint sa valeur maximum VM (point mort bas du piston 8t). En pratique, comme il est usuel dans les machines thermiques à pistons en général, l'ouverture de l'orifice d'échappement peut intervenir à un stade plus précoce pour laisser à la pression le temps de décroître au moins partiellement avant que le piston commence sa course de remontée vers la culasse.

La figure 11 représente un cycle à quatre temps pour la machine thermique du moteur hybride selon l'invention. Dans ce cas, le cycle nécessite deux allers et retours successifs du piston 8t. Une course complète du piston 8t en direction de la culasse 11 est dévolue à l'échappement (phase P1), la course complète suivante est dévolue à l'admission (phase P2) jusqu'à ce que le piston atteigne son point mort bas (volume VM). Au cours de la phase d'amission P2, l'orifice de refoulement est fermé. Dans l'exemple représenté à la figure 11, l'admission s'effectue à la pression atmosphérique. Il est également possible et même préféré de réaliser l'admission sous pression grâce à un turbocompresseur tel que 37 à la figure 1, auquel cas la phase d'admission P2 se situera au-dessus de la phase de refoulement P1 à la figure 11.

La phase d'admission P2 est suivie par une phase P23 de remontée du piston 8t sans compression. Cet effet peut être obtenu soit en ne refermant l'orifice d'admission qu'à la fin de la phase P23, soit au contraire avant la fin de la phase P2, pour que la fin de la phase P2 et la phase P23 constituent ensemble un aller-retour neutralisé, situé de part et d'autre du point mort bas. La phase P23 est suivie par des phases de compression adiabatique P3, de reflux P4, de transfert sortant P5, de transfert entrant P6 et de détente P7 qui sont sensiblement les mêmes que dans le cycle à deux temps illustré à la figure 4.

D'une manière non représentée, les cames 45 associées au moteur thermique peuvent être réglables angulairement pour réguler la pression dans le trajet récepteur de calories 33. Par exemple, si la pression dans le trajet 33 devient inférieure à un seuil bas, le volume Ve pour lequel se ferme l'orifice de transfert entrant est diminué de façon que moins de gaz puisse passer du trajet 33 dans la chambre de travail 22.

Lorsque l'on met en route le moteur hybride après une durée d'arrêt suffisamment prolongée, la masse de gaz présente dans le trajet 33 diminue sensiblement par des fuites passant par les orifices 24, 26, 27, 28. En effet, ceux-ci qui ne sont pas toujours parfaitement étanches à long terme, même si les quatre soupapes 29 sont en position fermée. La régulation de pression dans le trajet 33 assure automatiquement la montée en pression dans le trajet 33 lors de la mise en marche du moteur hybride. Même si une régulation de pression n'est pas prévue, on peut prévoir un décalage prédéfini du point de fermeture de l'orifice de transfert entrant pendant une phase initiale de fonctionnement du moteur hybride après chaque période d'arrêt.

La figure 1 représente deux particularités optionnelles qui permettent de réduire le temps de montée en pression du trajet 33 lors de la mise en marche du moteur hybride. Selon une première particularité, les deux extrémités du trajet 33 peuvent être fermées par des électrovannes 46 lorsque le moteur hybride est à l'arrêt.

Selon une particularité alternative ou complémentaire, le trajet 33 est relié à un accumulateur de pression 47 par l'intermédiaire d'une électrovanne 48 qui est commandée d'une part pour réguler le niveau de pression dans l'accumulateur 47 lorsque le moteur hybride fonctionne depuis un certain temps (après la mise en pression correcte du trajet 33) et qui d'autre part permet à l'accumulateur 47 de recharger rapidement le trajet 33 en gaz de travail (air) sous pression lorsque la pression dans le trajet 33 est insuffisante, notamment lors de la mise en fonctionnement du moteur hybride après une période d'arrêt.

Les températures maximales dans le moteur thermique sont relativement peut élevées, de l'ordre de 800°C, et peuvent être supportés par des matériaux convenables, pratiquement sans évacuation de chaleur par un système de refroidissement. Ainsi, pour améliorer le rendement du moteur thermique selon l'invention, il est prévu de calorifuger certaines au moins des surfaces qui délimitent la chambre de travail 22. Dans ce sens, on a représenté à la figure 2 que la surface de pression 23 du piston 8t est constituée par la face extérieure d'un revêtement isolant thermique 49. Un tel isolant pourrait également définir l'alésage 2t, au moins dans sa partie supérieure adjacente à la culasse 11.

Dans les moteurs à combustion interne usuels, de la chaleur est évacuée indifféremment par le circuit de refroidissement, le circuit de lubrification, et l'échappement. Selon l'invention, il est prévu de privilégier l'évacuation de chaleur du moteur à combustion interne par l'échappement, pour pouvoir optimiser la récupération d'énergie par le moteur thermique.

A cet effet, comme le montrent les figures 12 et 13, des dispositions sont prises pour réduire la quantité de chaleur que les gaz d'échappement du moteur à combustion interne transmettent à la culasse 11 et à son circuit de refroidissement non représenté. Pour cela, la culasse 11 présente un évidement 51 dont le fond est aussi proche que possible de l'orifice d'échappement 21 de façon à raccourcir au maximum le conduit d'échappement 13 formé dans la culasse 11 et débouchant dans le fond de l'évidement 51. Une tubulure d'échappement 52 vient de se fixer contre le fond de l'évidement 51. Le conduit intérieur 53 de la tubulure 52 prolonge le conduit 13 de la culasse. La tubulure 52 est réalisée par exemple en fonte ou même, de préférence, est une conduite en acier à double paroi comme illustré à la figure 13.

Aux figures 14 à 17, le moteur à combustion interne noté « MCI », et référencé 54 ou 64, et le moteur thermique noté « MT », et référencé 55 ou 65, sont représentés de manière symbolique, ainsi que leurs orifices respectifs 19, 21, 24, 26, 27, 28.

La configuration de la figure 14 convient pour un moteur à un cylindre thermique et deux ou trois cylindres à combustion interne. Elle est semblable à celle de la figure 1, excepté que la partie turbine 56 du turbocompresseur 57 est montée à la sortie du trajet apporteur de calories 34 de la source chaude 32.

D'une manière générale, connaissant la quantité de chaleur récupérable dans l'échappement du moteur à combustion interne, il est proposé selon l'invention de choisir la cylindrée et la pression de suralimentation du moteur thermique pour que la masse de gaz de travail traitée par ce moteur thermique à chaque cycle corresponde sensiblement à celle nécessaire pour absorber la chaleur récupérable de l'échappement du moteur à combustion interne. Au cas par cas, l'optimisation peut consister à adapter la pression de suralimentation du moteur thermique, à choisir un nombre de cylindres approprié, à choisir le cycle à deux temps ou le cycle à quatre temps, ou encore à choisir pour le moteur thermique une cylindrée unitaire différente de celle des cylindres du moteur à combustion interne.

Dans la configuration représentée à la figure 15, qui convient pour un moteur hybride comportant un moteur à combustion interne 64 à deux ou trois cylindres et un moteur thermique 65 à trois cylindres, la partie turbine 66 du turbocompresseur 67 est placée entre l'orifice de refoulement 26 du moteur thermique et le branchement 44 de ce refoulement dans le trajet apporteur de calories 34 de la source chaude 32. On a ainsi l'avantage de libérer l'échappement du moteur à combustion interne, c'est-à-dire de ne pas freiner cet échappement par la présence d'un turbocompresseur. Cette solution est plus facilement réalisable lorsque le moteur thermique est polycylindrique car alors la pression en son refoulement est moins fortement pulsée et permet ainsi un meilleur fonctionnement du turbocompresseur.

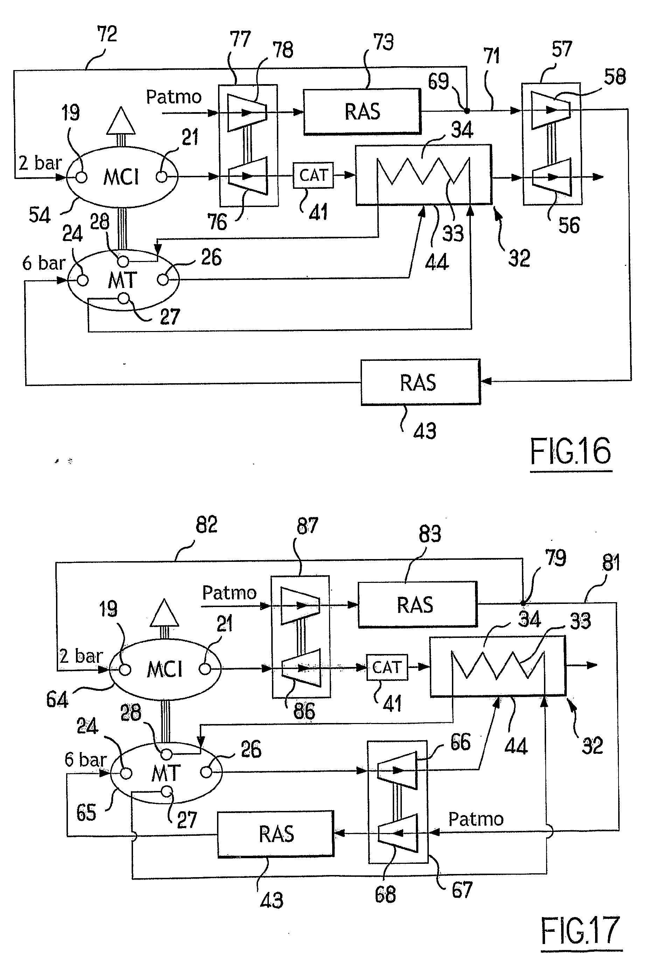

La figure 16 représente une configuration qui convient pour un moteur hybride à six cylindres comprenant un moteur à combustion interne à trois cylindres et un moteur thermique à trois cylindres. Cette configuration va être décrite pour ce qui concerne ses différences par rapport à la configuration de la figure 14. Le turbocompresseur 57 comporte une partie compresseur 58 qui est alimentée non par de l'air atmosphérique mais par de l'air ayant déjà subi une première compression dans la partie compresseur 78 d'un premier turbocompresseur 77. La partie turbine 76 du turbocompresseur 77 est installée entre l'orifice d'échappement 21 du moteur à combustion interne et le catalyseur 41. L'air de suralimentation produit par la partie compresseur 78 traverse un refroidisseur d'air de suralimentation 73 puis atteint une bifurcation 69 d'où une partie de cet air comprimé va à la partie compresseur 58 du turbocompresseur 57 par une branche 71, et une autre partie est envoyée à l'admission 19 du moteur à combustion interne 54 par une branche de conduit 72.

La configuration de la figure 17 convient pour un moteur hybride à six cylindres comprenant un moteur à combustion interne à trois cylindres et un moteur thermique à trois cylindres. Cette configuration va être décrite pour ce qui concerne ses différences par rapport à la configuration de la figure 15. Le turbocompresseur 67 comporte une partie compresseur 58 qui est alimentée non par de l'air atmosphérique mais par de l'air ayant déjà subi une première compression dans la partie compresseur 88 d'un premier turbocompresseur 87. La partie turbine 86 du turbocompresseur 87 est installée entre l'orifice d'échappement du moteur à combustion interne et le catalyseur 41. L'air de suralimentation produit par la partie compresseur 88 traverse un refroidisseur d'air de suralimentation 83 puis atteint une bifurcation 79 d'où une partie de cet air comprimé va à la partie compresseur 68 du turbocompresseur 67 par une branche 81, et une autre partie est envoyée à l'admission 19 du moteur à combustion interne 64 par une branche de conduit 82.

Ainsi, dans chacune des réalisations des figures 16 et 17, l'air alimentant le moteur à combustion interne est comprimé une fois pour présenter une pression effective de par exemple 0,2 MPa (2 bar) tandis que l'air envoyé à l'admission 24 du moteur thermique est comprimé deux fois pour atteindre une pression effective de par exemple 0,6 MPa (6 bar).

Bien entendu, l'invention n'est pas limitée aux exemples de réalisation qui viennent d'être décrits.

L'invention se rapporte à tous types de motorisation thermique, et n'est pas restreinte à une source chaude issue d'un moteur à combustion interne.

Dans le cas d'un moteur hybride, le moteur à combustion interne et le moteur thermique peuvent avoir des blocs moteurs séparés. Le moteur thermique peut être prévu comme une entité indépendante pouvant être adaptée sur des moteurs à combustion interne préexistants, ou autre source de chaleur modérée.

L'invention est applicable à tous types de motorisation à combustion interne, même pour des moteurs à grand nombre de cylindres. En particulier, l'invention est particulièrement avantageuse dans les motorisations pour véhicules poids lourds, les navires, et également dans les motorisations fixes lorsque la chaleur dégagée par un moteur à combustion interne n'est pas récupérable ou totalement récupérable pour d'autres usages que la motorisation.

Le rendement du moteur hybride selon l'invention est fortement amélioré par rapport au rendement d'un moteur à combustion interne classique. Le supplément de poids, de coût et la diminution de la puissance spécifique (puissance par décimètre cube de cylindrée) sont tout à fait acceptables pour la plupart des applications, notamment sur véhicules, y compris véhicules de tourisme du type voitures particulières. Les investissements industriels envisagés sont limités. On peut par exemple utiliser un bloc-moteur de type classique pour moteur à combustion interne dans lequel un ou plusieurs cylindres seront affectés au moteur thermique.

Comme les faces extérieures des soupapes associées aux orifices de transfert 27 et 28 sont soumises à la pression du trajet 33, qui tend à ouvrir ces soupapes, il peut être avantageux de les réaliser sous la forme de soupapes équilibrées en pression, par exemple d'après le EP 0 897 059 A2.

## Revendications

1. Moteur thermique (55) à source chaude externe (32) dans lequel le moteur possède au moins une chambre de travail (22) à volume variable pour un gaz de travail, et une distribution (29, 31) faisant communiquer cette chambre (22) avec une entrée froide d'un trajet récepteur de calories (33) pendant une phase de transfert sortant et avec une sortie chaude du trajet récepteur de calories (33) pendant une phase de transfert entrant, le trajet récepteur de calories (33) étant destiné réchauffer le gaz de travail à l'extérieur de la chambre (22) au contact de la source chaude externe (32), où la distribution est calée de façon à entretenir une pression dans le trajet récepteur de calories (33) **caractérisé en ce que** la distribution est calée de façon à mettre en communication lors du fonctionnement établi la chambre de travail (22) avec l'entrée froide du trajet récepteur de calories (33) alors que la pression dans la chambre (22) est inférieure à la pression dans le trajet récepteur de calories (33).

2. Moteur thermique selon la revendication 1, **caractérisé en ce qu'**il comprend un accumulateur de pression (47) qui est sélectivement relié au trajet récepteur de calories (33) de la source chaude (32) pour accumuler une réserve de gaz sous pression en fonctionnement établi et restituer au moins partiellement cette réserve lors d'un redémarrage du moteur après une période d'arrêt.

3. Moteur thermique selon la revendication 1 ou 2, **caractérisé par** un calage de distribution (29, 31) réglable en particulier pour permettre un gonflage initial du trajet récepteur de calories (33), et/ou pour réguler la pression dans le trajet récepteur de calories (33).

4. Moteur thermique selon l'une des revendications 1 à 3, caractérisé qu'au début d'une phase de transfert sortant (P5) la chambre (22) a un volume (Vs) plus petit que son volume (Ve) à la fin de la phase de transfert entrant (P6).

5. Moteur thermique selon l'une des revendications 1 à 4, **caractérisé en ce qu'**au moins une surface (23) délimitant la chambre de travail (22), en particulier la surface de pression du piston, est définie par un revêtement thermiquement isolant (49).

6. Moteur thermique selon l'une des revendications 1 à 5, **caractérisé en ce que** le moteur thermique fonctionne suivant un cycle à deux temps dans lequel une phase de refoulement (P1), une phase de compression (P3) et la phase de transfert sortant (P5) se succèdent le long d'une même course de décroissance du volume de la chambre (22).

7. Moteur thermique selon la revendication 6, **caractérisé en ce que** l'admission (P2) dans la chambre de travail (22) est réalisée sous pression entre la phase de refoulement (P1) et la phase de compression (P3).

8. Moteur thermique selon l'une des revendications 1 à 5, **caractérisé en ce que** le moteur thermique fonctionne selon un cycle à quatre temps comprenant :
- un temps de croissance du volume de la chambre pour une phase (P2) d'admission du gaz de travail ;
- un temps de décroissance du volume de la chambre pour la phase (P3) de compression du gaz de travail suivie de la phase de transfert sortant (P5);
- un temps de croissance du volume de la chambre pour une phase de transfert entrant (P6) puis une phase de détente (P7); et
- un temps de décroissance du volume de la chambre (22) pour une phase (P1) de refoulement du gaz de travail.

9. Moteur thermique selon l'une des revendications 1 à 8, **caractérisé en ce que**:
- la chambre de travail (22) est délimitée par un piston (8t), lequel provoque alternativement des temps de croissance et de décroissance du volume de la chambre;
- la distribution (29, 31) est conçue pour sélectivement fermer la chambre de travail (22) et respectivement faire sélectivement communiquer la chambre de travail (22) avec une admission (24) de gaz de travail, un refoulement (26) de gaz de travail, l'entrée froide du trajet récepteur de calories (33) et la sortie chaude du trajet récepteur de calories (33);
et **en ce que** la distribution fait communiquer la chambre avec l'entrée froide au cours de la phase de transfert sortant (P5) après la phase (P3) de compression du gaz de travail dans la chambre de travail, et avec la sortie chaude au cours d'une phase de transfert entrant (P6) qui précède une phase de détente (P7).

10. Moteur thermique selon l'une des revendications 1 à 9, **caractérisé en ce que** la distribution est calée de façon qu'à la fin de la phase de détente (P7) la chambre ait un volume (V_{M}) plus grand que son volume en début de phase de compression (P3).

11. Moteur thermique selon l'une des revendications 1 à 10, **caractérisé en ce que** le refoulement (26, 16) du moteur thermique (55) est raccordé à une entrée tiède (44) de la source chaude externe (32), la température de l'entrée tiède étant intermédiaire entre la température d'un flux apporteur de calories à l'entrée de la source chaude, et la température à laquelle le flux apporteur de calories sort de la source chaude.

12. Moteur thermique selon l'une des revendications 1 à 11, **caractérisé en ce que** la source chaude externe (32) est alimentée en énergie calorifique par le flux apporteur de calories de l'échappement (21, 13) d'un moteur à combustion interne (54).

13. Moteur thermique selon la revendication 12, **caractérisé par** un calorifugeage de l'échappement du moteur à combustion interne (54) sur une partie au moins de son trajet entre un orifice d'échappement (21) adjacent à la chambre de combustion (22) d'une part et l'entrée chaude du gaz d'échappement dans la source chaude (32) d'autre part.

14. Moteur hybride comprenant un moteur thermique selon l'une des revendications 1 à 11, et un moteur à combustion interne (54) dont l'échappement alimente le flux apporteur de calories de la source chaude du moteur thermique.

15. Moteur hybride selon la revendication 14, **caractérisé en ce que** la source chaude (32) comporte pour le flux apporteur de calories une sortie raccordée à l'entrée d'une turbine (56) de turbocompresseur (57).

16. Moteur hybride selon la revendication 14, **caractérisé en ce qu'**une turbine (66) est intercalée entre le refoulement (26) du moteur thermique (65) et une entrée tiède (44) de la source chaude (32), la température de l'entrée tiède étant intermédiaire entre le flux apporteur de calories à l'entrée de la source chaude, et la température à laquelle le flux apporteur de calories sort de la source chaude.

17. Moteur hybride selon la revendication 14, **caractérisé en ce que** le refoulement (26) du moteur thermique (65) est raccordé à l'entrée d'une turbine (66) de turbocompresseur (67).

18. Moteur hybride selon l'une des revendications 15 à 17, **caractérisé en ce que** le turbocompresseur (37, 57, 67) comprend un compresseur (38) dont la sortie est raccordée à l'admission (24) du moteur thermique (55, 65).

19. Moteur hybride selon l'une des revendications 15 à 17, **caractérisé en ce que** le turbocompresseur est un second turbocompresseur, dont l'entrée de compresseur est raccordée à la sortie de compresseur d'un premier turbocompresseur (77, 87) dont la turbine (76, 86) est traversée par le flux apporteur de calories en amont de la source chaude (32).

20. Moteur hybride selon la revendication 19, **caractérisé en ce que** la sortie de la turbine (76, 86) du premier turbocompresseur (77, 87) est raccordée au moins indirectement à l'entrée chaude de la source chaude.

21. Moteur hybride selon la revendication 19, **caractérisé en ce que** la sortie de compresseur du premier turbocompresseur (77, 87) est de plus raccordée à l'admission (19) du moteur à combustion interne (54, 64).

22. Moteur hybride selon l'une des revendications 14 à 21, **caractérisé en ce qu'**au moins un piston (8t) du moteur thermique est accouplé à un arbre (4), le moteur à combustion interne (54) comportant en outre au moins un piston (8c) accouplé à l'arbre (4).

23. Moteur hybride selon l'une des revendications 14 à 22, **caractérisé en ce que** le moteur à combustion interne (54) et le moteur thermique (55) possèdent un bloc-moteur commun (1).

24. Moteur hybride selon l'une des revendications 20 à 23, **caractérisé en ce que** le piston (8t) du moteur thermique (55) possède même superficie de sa surface de pression (23) et même longueur de course que le piston (8c) du moteur à combustion interne (54).

25. Moteur hybride selon l'une des revendications 20 à 23, **caractérisé en ce que** le piston (8t) du moteur hybride (55) a une superficie différente et/ou une longueur de course différente(s) de celles, respectivement, du piston (8c) du moteur à combustion interne (54).

26. Moteur hybride selon l'une des revendications 14 à 25, **caractérisé en ce que** le moteur à combustion interne fonctionne selon un cycle à quatre temps et le moteur thermique selon un cycle à deux temps.

## Patentansprüche

1. Wärmekraftmaschine (55) mit aüßerer Wärmequelle (32), wobei der Motor über mindestens eine Arbeitskammer (22) mit variablem Volumen für ein Arbeitsgas und über einen Ventiltrieb (29, 31) verfügt, welcher diese Kammer (22) mit einem kalten Eintritt eines Wärmeaufnahmewegs (33) während einer austretende Übertragungsphase sowie mit einem warmen Austritt des Wärmeaufnahmewegs (33) während einer eintretenden Übertragungsphase verbindet, wobei der Wärmeaufnahmeweg (33) dazu bestimmt ist, das Arbeitsgas außerhalb der Arbeitskammer (22) in Berührung mit der aüßeren Wärmequelle (32) anzuheizen, wobei der Ventiltrieb derart zeitgesteuert ist, dass ein Druck in dem Wärmeaufnahmeweg (33) aufrecht erhalten wird, **dadurch gekennzeichnet, dass** der Ventiltrieb derart zeitgesteuert ist, dass im etablierten Betrieb die Arbeitskammer (22) mit dem kalten Eintritt des Wärmeaufnahmewegs (33) in Verbindung gesetzt wird, wenn der Druck in der Kammer (22) niedriger als der Druck im Wärmeaufnahmeweg (33) ist.

2. Wärmekraftmaschine nach Anspruch 1, **dadurch gekennzeichnet, dass** sie einen Druckspeicher (47) umfasst, der mit dem Wärmeaufnahmeweg (33) der Wärmequelle (32) selektiv verbunden ist, um etablierten Betrieb einen Vorrat an Druckgas zu speichern und um diesen Vorrat bei Neustart der Maschine nach einer Abschaltzeit zumindest teilweise wieder abzugeben.

3. Wärmekraftmaschine nach Anspruch 1 oder 2, durch eine Zeitsteuerung des Ventiltriebs (29, 31) gekennzeichnet, welche insbesondere dazu verstellbar ist, um ein ursprüngliches Aufblasen des Wärmeaufnahmeweges (33) zu ermöglichen und/oder um den Druck im Wärmeaufnahmeweg (33) zu steuern.

4. Wärmekraftmaschine nach einem der Ansprüche 1-3, **dadurch gekennzeichnet, dass** zu Beginn einer austretende Übertragungsphase (P5) die Kammer (22) ein Volumen (Vs) kleiner als ihr Volumen (Ve) am Ende der eintretenden Übertragungsphase (P6) aufweist.

5. Wärmekraftmaschine nach einem der Ansprüche 1-4, **dadurch gekennzeichnet, dass** mindestens eine die Arbeitskammer (22) ausmachende Oberfläche (23), insbesondere die Druckfläche des Kolbens, über eine wärmeisolierende Beschichtung (49) definiert ist.

6. Wärmekraftmaschine nach einem der Ansprüche 1-5, **dadurch gekennzeichnet, dass** die Wärmekraftmaschine gemäß einem Zweitaktzyklus arbeitet, in welchem eine Ausstoßphase (P1), eine Verdichtungsphase (P3) und die austretende Übertragungsphase (P5) entlang eines gleichen Abfallhubs des Volumens der Kammer (22) aufeinander folgen.

7. Wärmekraftmaschine nach Anspruch 6, **dadurch gekennzeichnet, dass** der Einlass (P2) in die Arbeitskammer (22) zwischen der Ausstoßphase (P1) und der Verdichtungsphase (P3) unter Druck erfolgt.

8. Wärmekraftmaschine nach einem der Ansprüche 1-5, **dadurch gekennzeichnet, dass** die Wärmekraftmaschine gemäß einem Viertaktzyklus arbeitet, welcher umfasst:
- einen Zeitabschnitt der Volumenzunahme der Kammer für eine Phase (P2) des Einlasses des Arbeitsgases;
- einen Zeitabschnitt des Volumenabfalls der Kammer für die Phase (P3) der Verdichtung des Arbeitsgases, gefolgt von der austretenden Übertragungsphase (P5);
- einen Zeitabschnitt der Volumenzunahme für eine eintretende Übertragungsphase (P6) dann eine Expansionsphase (P7); und
- einen Zeitabschnitt des Volumenabfalls der Kammer (22) für eine Ausstoßphase (P1) des Arbeitsgases.

9. Wärmekraftmaschine nach einem der Ansprüche 1-8, **dadurch gekennzeichnet, dass**:
- die Arbeitskammer (22) durch einen Kolben (8t) eingegrenzt ist, welcher abwechselnd Zeitabschnitte der Zunahme und des Abfalls des Kammervolumens verursacht;
- der Ventiltrieb (29, 31) derart ausgebildet ist, um selektiv die Arbeitskammer (22) zu schließen und die Arbeitskammer (22) jeweils selektiv mit einem Einlass (24) von Arbeitsgas, einem Ausstoß (26) von Arbeitsgas, dem kalten Eintritt des Wärmeaufnahmeweges (33) und dem warmen Austritt des Wärmeaufnahmeweges (33) zu verbinden;
und dadurch, dass der Ventiltrieb die Kammer mit dem kalten Eintritt während der austretenden Übertragungsphase (P5) nach der Verdichtungsphase (P3) des Arbeitsgases in der Arbeitskammer, und mit dem warmen Austritt während einer einer Expansionsphase (P7) vorausgehenden eintretenden Übertragungsphase (P6) verbindet.

10. Wärmekraftmaschine nach einem der Ansprüche 1-9, **dadurch gekennzeichnet, dass** der Ventiltrieb derart zeitgesteuert ist, dass am Ende der Expansionsphase (P7) die Kammer ein Volumen (V_{M}) größer als ihr Volumen zu Beginn der Verdichtungsphase (P3) aufweist.

11. Wärmekraftmaschine nach einem der Ansprüche 1-10, **dadurch gekennzeichnet, dass** der Ausstoß (26, 16) der Wärmekraftmaschine (55) an einem lauwarmen Eintritt (44) der aüßeren Wärmequelle (32) angeschlossen ist, wobei die Temperatur des lauwarmen Eintritts zwischen der Temperatur eines Wärmebringenden Flusses am Eintritt der Wärmequelle und der Temperatur liegt, zu welcher der Wärmebringende Fluss aus der Wärmequelle austritt.

12. Wärmekraftmaschine nach einem der Ansprüche 1-11, **dadurch gekennzeichnet, dass** die aüßere Wärmequelle (32) mit Wärmeenergie über den Wärmebringenden Fluss des Auspuffs (21, 13) einer Innenverbrennungskraftmaschine (54) versorgt wird.

13. Wärmekraftmaschine nach Anspruch 12, durch eine Wärmedämmung des Auspuffs der Innenverbrennungskraftmaschine (54) auf mindestens einen Teil seines Wegs zwischen einerseits einer der Verbrennungskammer (22) angrenzenden Auspufföffnung (21) und andererseits dem warmen Eintritt des Abgases in die Wärmequelle (32) gekennzeichnet.

14. Hybrid-Motor, eine Wärmekraftmaschine nach einem der Ansprüche 1-11 sowie eine Innenverbrennungskraftmaschine (54) umfassend, deren Auspuff den Wärmebringenden Fluss der Wärmequelle der Wärmekraftmaschine versorgt.

15. Hybrid-Motor nach Anspruch 14, **dadurch gekennzeichnet, dass** die Wärmequelle (32) für den Wärmebringenden Fluss einen mit dem Eintritt einer Turbine (56) eines Turbokompressors (57) verbundenen Austritt umfasst.

16. Hybrid-Motor nach Anspruch 14, **dadurch gekennzeichnet, dass** eine Turbine (66) zwischen dem Auspuff (26) der Wärmekraftmaschine (65) und einem lauwarmen Eintritt (44) der Wärmequelle (32) angeordnet ist, wobei die Temperatur des lauwarmen Eintritts zwischen der Temperatur des Wärmebringenden Flusses am Eintritt der Wärmequelle und der Temperatur liegt, zu welcher der Wärmebringende Fluss aus der Wärmequelle austritt.

17. Hybrid-Motor nach Anspruch 14, **dadurch gekennzeichnet, dass** der Ausstoß (26) der Wärmekraftmaschine (65) an dem Eintritt einer Turbine (66) eines Turbokompressors (67) angeschlossen ist.

18. Hybrid-Motor nach einem der Ansprüche 15-17, **dadurch gekennzeichnet, dass** der Turbokompressor (37, 57, 67) einen Kompressor (38) umfasst, dessen Austritt an dem Einlass (24) der Wärmekraftmaschine (56, 65) angeschlossen ist.

19. Hybrid-Motor nach einem der Ansprüche 15-17, **dadurch gekennzeichnet, dass** der Turbokompressor ein zweiter Turbokompressor ist, dessen Verdichtereintritt an dem Verdichteraustritt eines ersten Turbokompressors (77, 87) verbunden ist, wobei der Wärmebringende Fluss diese Turbine (76, 86) vor der Wärmequelle (32) durchfließt.

20. Hybrid-Motor nach Anspruch 19, **dadurch gekennzeichnet, dass** der Austritt der Turbine (76, 86) des ersten Turbokompressors (77, 87) mindestens unmittelbar an dem warmen Eintritt der Wärmequelle angeschlossen ist.

21. Hybrid-Motor nach Anspruch 19, **dadurch gekennzeichnet, dass** der Verdichteraustritt des ersten Turbokompressors (77, 87) außerdem an dem Einlass (19) der Innenverbrennungskraftmaschine (54, 64) angeschlossen ist.

22. Hybrid-Motor nach einem der Ansprüche 14-21, **dadurch gekennzeichnet, dass** mindestens ein Kolben (8t) der Wärmekraftmaschine mit einer Welle (4) gekoppelt ist, wobei die Innenverbrennungskraftmaschine (54) außerdem mindestens einen mit der Welle (4) gekoppelten Kolben (8c) umfasst.

23. Hybrid-Motor nach einem der Ansprüche 14-22, **dadurch gekennzeichnet, dass** die Innenverbrennungskraftmaschine (54) und die Wärmekraftmaschine (55) über einen gemeinsamen Motorblock verfügen.

24. Hybrid-Motor nach einem der Ansprüche 20-23, **dadurch gekennzeichnet, dass** der Kolben (8t) der Wärmekraftmaschine (55) die gleiche Fläche seiner Druckoberfläche (23) und die gleiche Hublänge wie der Kolben (8c) der Innenverbrennungskraftmaschine (54) aufweist.

25. Hybrid-Motor nach einem der Ansprüche 20-23, **dadurch gekennzeichnet, dass** der Kolben (8t) des Hybrid-Motors (55) eine andere Fläche und/oder eine andere Hublänge als der Kolben (8c) der Innenverbrennungskraftmaschine (54) aufweist.

26. Hybrid-Motor nach einem der Ansprüche 14-25, **dadurch gekennzeichnet, dass** die Innenverbrennungskraftmaschine gemäß einem Viertaktzyklus und die Wärmekraftmaschine gemäß einem Zweitaktzyklus arbeiten.

## Claims

1. A heat engine (55) with external hot source (32) in which the engine has at least one variable volume working chamber (22) for a working gas, and a distribution mechanism (29, 31) that connects this chamber (22) to a cold inlet of a heat receiving path (33) during an outgoing transfer phase and to a hot outlet of the energy receiving path (33) during an incoming transfer phase, the heat receiving path (33) being intended to heat the working gas outside the chamber (22) on contact with the external hot source (32), wherein the distribution mechanism is timed in such a way as to:
- maintain pressure in the heat receiving path (33);
**characterized in that** the distribution is timed in such a way as to:
- during stable operation, connect the working chamber (22) with the cold inlet of the heat receiving path (33) whilst the pressure in the chamber (22) is lower than the pressure in the heat receiving path (33).

2. A heat engine according to claim 1, **characterised by** comprising a pressure accumulator (47) that is selectively connected to the heat receiving path (33) of the hot source (32) to accumulate a reserve of pressurised gas during stable operation and at least partly return this reserve when the engine is restarted after a period of stoppage.

3. A heat engine according to claim 1 or 2, **characterised by** controllable valve timing (29, 31) in particular to allow for initial pressurisation of the heat receiving path (33) and/or to control the pressure in the heat receiving path (33).

4. A heat engine according to one of claims 1 to 3, **characterised in that** at the start of an outgoing transfer phase (P5) the chamber (22) has a smaller volume (Vs) than its volume (Ve) at the end of the incoming transfer phase (P6).

5. A heat engine according to one of claims 1 to 4, **characterised in that** at least one surface (23) delimiting the working chamber (22), particularly the pressure face of the piston, is defined by a heat insulating coating (49).

6. A heat engine according to one of claims 1 to 5, **characterised in that** the heat engine operates on a two-stroke cycle in which a discharge phase (P1), a compression phase (P3) and the outgoing transfer phase (P5) are successive along a same stroke during which the chamber (22) volume diminishes.

7. A heat engine according to claim 6, **characterised in that** the intake (P2) into the working chamber (22) takes place under pressure between the discharge phase (P1) and the compression phase (P3).

8. A heat engine according to one of claims 1 to 5, **characterised in that** the heat engine operates on a four-stroke cycle comprising:
- a chamber volume growth stroke for a working gas intake phase (P2);
- a chamber volume reduction stroke for the working gas compression phase (P3) followed by the outgoing transfer phase (P5);
- a chamber volume growth stroke for an incoming transfer phase (P6) then an expansion phase (P7); and
- a chamber (22) volume reduction stroke for a working gas discharge phase (P1);

9. A heat engine according to one of claims 1 to 8, **characterised in that**:
- the working chamber (22) is delimited by a piston (8t), which alternately causes chamber volume growth and volume reduction strokes;
- the distribution mechanism (29, 31) is designed to selectively close the working chamber (22) and respectively selectively connect the working chamber (22) with a working gas intake (24), a working gas discharge (26), the cold inlet of the heat receiving path (33) and the hot outlet of the heat receiving path (33).
and **in that** the distribution mechanism connects the chamber with the cold inlet during the outgoing transfer phase (P5) after the compression phase (P3) of the working gas in the working chamber, and with the hot outlet during an incoming transfer phase (P6) that precedes an expansion phase (P7).

10. A heat engine according to one of claims 1 to 9, **characterised in that** the distribution mechanism is timed so that at the end of the expansion phase (P7), the chamber has a volume (VM) larger than its volume at the start of the compression phase (P3).

11. A heat engine according to one of claims 1 to 10, **characterised in that** the discharge (26, 16) of the heat engine (55) is connected to a warm inlet (44) of the external hot source (32), the temperature of the warm inlet being between the temperature of a heat supply flow at the inlet of the hot source, and the temperature at which the heat supply flow leaves the hot source.

12. A heat engine according to one of claims 1 to 11, **characterised in that** the external hot source (32) is supplied with heat energy by the heat supply flow from the exhaust (21, 13) of an internal combustion engine (54).

13. A heat engine according to claim 12, **characterised by** a heat insulation of the exhaust of the internal combustion engine (54) over at least part of its path between an exhaust port (21) adjacent to the combustion chamber (22) on the one hand and the hot inlet of the exhaust gas into the hot source (32) on the other hand.

14. An hybrid engine comprising a heat engine according to one of claims 1 to 11 and an internal combustion engine (54) the exhaust of which supplies the heat supply flow of the hot source of the heat engine.

15. An hybrid engine according to claim 14, **characterised in that** the hot source (32) comprises for the heat supply flow an outlet connected to the inlet of a turbocharger (57) turbine (56).

16. An hybrid engine according to claim 14, **characterised in that** a turbine (66) is inserted between the discharge (26) of the heat engine (65) and a warm inlet (44) of the external hot source (32), the temperature of the warm inlet being between the temperature of the heat supply flow at the inlet of the hot source, and the temperature at which the heat supply flow leaves the hot source.

17. An hybrid engine according to claim 14, **characterised in that** the discharge (26) of the heat engine (65) is connected to the inlet of a turbocharger (67) turbine (66).

18. An hybrid engine according to one of claims 15 to 17, **characterised in that** the turbocharger (37, 57, 67) comprises a compressor (38) the outlet of which is connected to the intake (24) of the heat engine (55, 65).

19. An hybrid engine according to one of claims 15 to 17, **characterised in that** the turbocharger is a second turbocharger, the compressor inlet of which is connected to the compressor outlet of a first turbocharger (77, 87) with a turbine (76, 86) through which the heat supply flow travels upstream of the hot source (32).

20. An hybrid engine according to claim 19, **characterised in that** the turbine (76, 86) outlet of the first turbocharger (77, 87) is connected at least indirectly to the hot inlet of the hot source.

21. An hybrid engine according to claim 19, **characterised in that** the compressor outlet of the first turbocharger (77, 87) is moroever connected to the intake (19) of the internal combustion engine (54, 64).

22. An hybrid engine according to one of claims 14 to 21, **characterised in that** at least one piston (8t) of the heat engine is coupled to a shaft (4), the internal combustion engine (54) also comprising at least one piston (8c) coupled to the shaft (4).

23. An hybrid engine according to one of claims 14 to 22, **characterised in that** the internal combustion engine (54) and the heat engine (55) have a common engine block (1).

24. An hybrid engine according to one of claims 20 to 23, **characterised in that** the piston (8t) of the heat engine (55) has the same pressure face (23) area and the same stroke length as the piston (8c) of the internal combustion engine (54).

25. An hybrid engine according to one of claims 20 to 23, **characterised in that** the piston (8t) of the hybrid engine (55) has a different area and/or a different stroke length from those respectively of the piston (8c) of the internal combustion engine (54).

26. An hybrid engine according to one of claims 14 to 25, **characterised in that** the internal combustion engine operates on a four-stroke cycle and the heat engine on a two-stroke cycle.
